(19) **Europäisches Patentamt**
**European Patent Office**
**Office européen des brevets**

(11) **EP 4 471 626 A1**

(12) **EUROPEAN PATENT APPLICATION**

(43) Date of publication:
**04.12.2024 Bulletin 2024/49**

(21) Application number: **23382520.7**

(22) Date of filing: **31.05.2023**

(51) International Patent Classification (IPC):
**G06F 18/28** (2023.01)     **G06V 10/72** (2022.01)
**G06V 10/772** (2022.01)     **G06V 10/774** (2022.01)

(52) Cooperative Patent Classification (CPC):
**G06V 10/72; G06F 18/28; G06V 10/772; G06V 10/774**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Foqum Analytics S.L.**
**28080 Madrid (ES)**

(72) Inventor: **González de Prado Salas, Pablo**
**28080 Madrid (ES)**

(74) Representative: **Clarke, Modet y Cía., S.L.**
**C/ Suero de Quiñones 34-36**
**28002 Madrid (ES)**

(54) **COMPUTER-IMPLEMENTED METHOD AND SYSTEM FOR TRAINING A CLASSIFIER WITH A LARGE MULTILABEL TRAINING DATASET**

(57)    Computer-implemented method and system for training a classifier with a large multilabel training dataset. The method (100) comprises receiving (110) a multilabel training dataset (102) with data examples (202) associated to categories (204) from a set of categories (206) and performing oversampling iterations (120) including:
- Obtaining (130) a frequency (132) for each category (204).
- Computing (140) a category relevance score (142) for each category (204) as a function of a logarithm of the frequency (132) of the category (204).
- Computing (150) an example relevance score (152) for each data example (202) as a function of the sum of the category relevance scores (142) of the categories (204) associated to the data example (202).
- Extending (160) the multilabel training dataset (102) with copies or synthetic variations (302) of data examples (202) with highest example relevance scores (152).

The method (100) comprises training (170) a classifier (530) using the extended multilabel training dataset (104). The performance of the trained classifier (530) is improved by increasing the precision and recall in the prediction and reducing the number of useless categories.

FIG. 2

**Description**

**FIELD**

The present invention is comprised within the field of classifiers, such as image classifiers, and more particularly in the field of training classifiers using large multilabel training datasets including numerous categories.

**BACKGROUND**

Nowadays many industry and business sectors, such as the fashion sector, are characterized by a fast stream of complex data, a big part of which takes the form of photographs. These photographs have various sources and focus on different aspects of the business: from paparazzi images of celebrities to coverage of fashion events. The miscellaneous nature of these sources makes it hard to enforce procedures and quality standards, which results in the need to postprocess these images by large teams of employees.

Photographs are usually labelled manually to facilitate data queries and storage. But the labels or tags used for these images are typically varied, for example by specifying colour (e.g. "brown handbag") or by including reference to less common accessories (e.g. "tiara") in the fashion sector. Such particular labelling results in unbalanced datasets, where many pictures will include common tags (e.g. "sunglasses") but very few will belong to other classes (e.g. "short green coats"). The problem is compounded by the fact that these unbalanced datasets are multilabel datasets, meaning that a single picture of the dataset may include any number of different categories (also known as classes), unlike the multicategory dataset where each data example belongs to one and only one category selected from a set of categories. Multicategory datasets are frequently unbalanced. For instance, in an assumed scenario data examples (e.g. photographs) of a multicategory dataset are classified in three different categories A, B and C, each one with a frequency of 10000, 200 and 100, respectively.

In this example some categories are much more frequent than others, as it happens in real applications: category A is 100 times more frequent than category C (a frequency ratio 1:100). For categories A and B this frequency ratio is 1:50, whereas for categories B and C we have a frequency ratio 1:2. These differences in data representation introduce important biases in classification algorithms.

Unbalanced multicategory datasets are not optimal for training a classifier (e.g. an image classifier). A data balancing process is normally applied to these unbalanced multicategory datasets to obtain a more suitable dataset for training a classifier, so that the classifier thus obtained is more efficient. The most typical approach to handle this unbalanced situation is undersampling or oversampling the dataset. In the first case, frequent elements are removed from the dataset (losing information), while in the second case copies of the less-represented data examples are added to the dataset.

It is worth noting that there are oversampling techniques that include non-identical variations (called synthetic variations) of the data examples, such as SMOTE, instead of adding copies of the data examples. However, in both oversampling techniques (adding copies or synthetic variations) it is necessary to identify the most interesting data examples in the first place, which will be subsequently replicated or serve as seed for new synthetic examples.

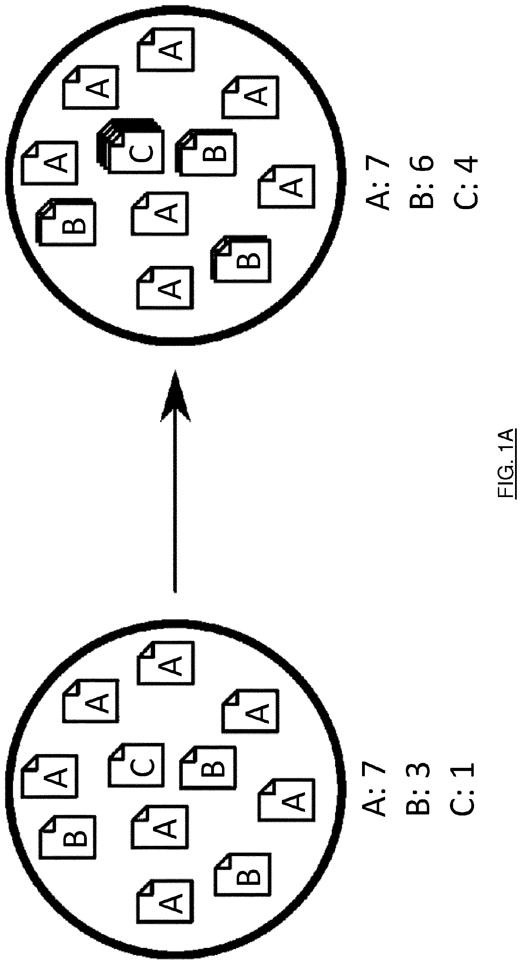

Oversampling works well in practice, but this technique has limitations that need to be considered. For example, going from a frequency ratio of 1:100 to 1:10 for two given categories (A and C, in the previous example) may involve adding too many data examples, which interferes with the abstraction capacity of the model and increases the risk of overfitting. Regardless of these limitations, it is still necessary to identify data examples of the less-represented categories, and then include a given number of copies (or synthetic variations) of the identified data examples, as illustrated in the example of Figure 1A in which the original dataset (on the left) including 7 data examples of category A, 3 data examples of category B and 1 data example of category C is oversampled (dataset on the right) by adding copies of the data examples belonging to the categories which are least frequent (B and C), in particular three copies of the only data example belonging to the least frequent category C and one copy of each one of the data examples belonging to category B.

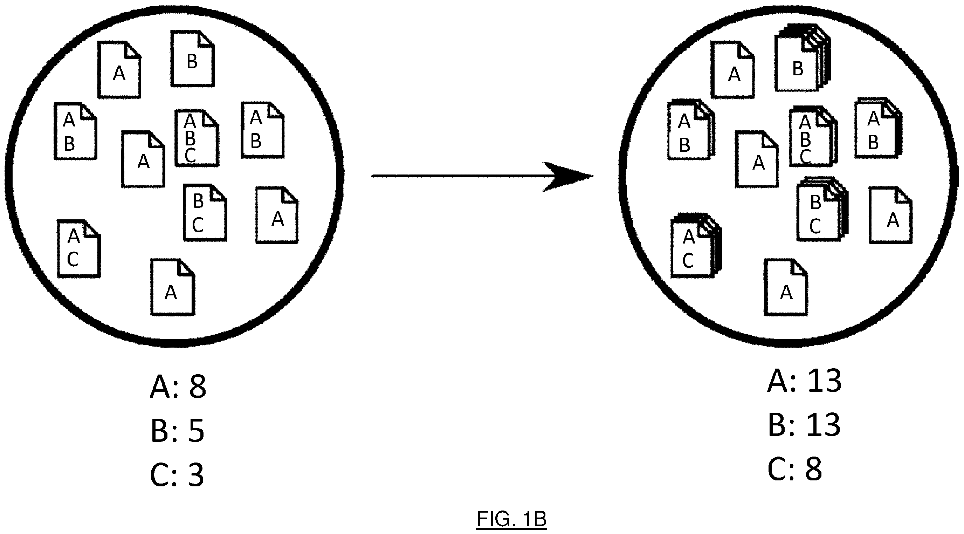

Figure 1B illustrates an example of a different kind of dataset, a multilabel dataset, wherein each data example may simultaneously belong to different categories (left image). For instance, an image (data example) showing a pair of sunglasses and a handbag may be classified with two different tags or categories: "sunglasses" and "handbags". It is also possible to find images in the dataset that are not relevant for any of the defined as relevant categories (e.g. relevant categories are A, B and C, and an image belongs to categories D and E).

Unbalanced multilabel datasets are also not desirable for training a classifier. However, data balancing in multilabel datasets is much more complex than data balancing in multicategory datasets, since there is no easy way to identify which data examples are more convenient for replication. Additionally, applying SMOTE to multilabel datasets is not trivial [1]. If data examples that belong only to an underrepresented category are identified, then these obviously are relevant examples. But these data examples are frequently mixed with other categories, which are potentially more frequent. In this case it is not clear whether it is a good idea to introduce copies of these data examples, since more examples of common labels may hinder learning over other underrepresented classes; therefore, there is a cost-benefit dilemma for each individual data example examined.

The right image of Figure 1B depicts the multi-label dataset after applying a data balancing method on the original dataset depicted on the left image. The original dataset, which includes 8 data examples belonging to category A, 5 data examples associated to category B and 3 data examples belonging to category C, is oversampled by adding copies of several data examples, resulting in an extended multilabel dataset with 13 examples of category A, 13 examples of category B and 8 examples of category C.

The challenge is to identify which combinations of categories are more interesting to introduce data copies, and how many copies of each one should be generated. The most relevant data balancing methods of the prior art for multilabel datasets are the Naive method, the Powerset method and decoupling.

The Naive method is a very simple algorithm that is fast and easy to implement, and that works well in common scenarios [2]. The idea is to characterize each data example by looking at its most underrepresented class exclusively. The tags of the data example are not altered, but for the purposes of data balancing all but the most uncommon class of each data example will be disregarded. This idea quickly transforms the complex multilabel problem into a well-known multicategory dataset, where the techniques discussed above can be applied. This method is technically and conceptually simple. The limitation is that, by ignoring all other classes, copies of common classes will be we added frequently, which may actually further increase the asymmetries of the problem. How well this approach works will thus depend on which correlations exist between classes, and on the average number of positive classes per example. If we commonly have examples with four, six labels, then the likelihood of introducing copies of common labels is much more severe than in a dataset where most examples belong to one or two classes.

The Powerset method presents a different strategy to transform the multilabel problem into a multicategory dataset, as far as data balancing will be concerned (again, with no alteration of the data example labels). In this case, each label combination is considered as its own label [2], [3]; for instance:

{"A","B","C"} →"new_category_1"
{"B","C"} →"new_category_2"
{"A" } →"new_category_3"
etc.

By definition, this means that each example will be associated to only one category. Frequencies for each of the new categories are calculated and then any method for data balancing of multicategory datasets is applied. In contrast with the Naive method, all classes for each example are considered. The most serious limitation of the Powerset method arises for datasets with many labels, where each specific combination of classes will be typically very rare. In an extreme example, each new category will be comprised of only one data example, which makes further statistical analysis meaningless. Such is the case of a target dataset with 174 labels and 5.746 unique combinations of labels.

Decoupling is a technique that creates copies of examples with problems of concurrency (typically involving frequent and uncommon labels) [4]. Each data instance will be assigned a different set of labels. For example, assuming that labels "A" and "D" are frequent, and labels "B" and "C" are uncommon. Then:
Image1{"A","B","C","D"}
→Image1'{"A","D"}+Image1"{"B","C"}

Common labels may "drown" less frequent labels, so presenting them separately may help some algorithms. Of course, this now allows to consider the new data examples for oversampling and undersampling (e.g., we could add copies of Image1' {"B", "C"} while leaving just the one copy of Image1' {"A","D"}).

This strategy also presents challenges. Firstly, we need a robust way to decide which examples to decouple, and which labels belong in each class. This usually requires fiddling with parameters, which is undesirable since we are looking for a robust method that requires minimal maintenance. Lastly, by construction, this clever trick works best in very "polarized" datasets, where very rare labels occur most often together with very common labels. But in other cases we may have less extreme concurrency, particularly involving concurrency among very uncommon, uncommon, and not-so-common labels. On top of that, duplicating many data examples may be problematic for larger datasets, running into memory problems or complicating the pipeline architecture.

The present invention presents a new approach for training a classifier using a large multilabel training dataset that solves the aforementioned problems.

References

[1] Giraldo-Forero et al. Managing Imbalanced Data Sets in Multilabel Problems: A Case Study with the SMOTE Algorithm. 2013

[2] Charte et al. Addressing imbalance in multilabel classification: Measures and random resampling algorithms. Neurocomputing 163 (2015) 3-16

[3] Boutell, M., Luo, J., Shen, X., Brown, C.: Learning multi-label scene classification. Pattern Recognition 37(9), 1757-1771 (2004)

[4] Charte et al. Resampling Multilabel Datasets by Decoupling Highly Imbalanced Labels. 2015

**SUMMARY**

The invention relates to a computer-implemented method and system for training a classifier with a large multi-label training dataset, using an iterative data balancing algorithm to address the challenge of unbalanced multicategory datasets in a simple and fast way, with an emphasis on minimizing dependence on adjustable parameters.

The method computes the frequency (i.e. counts the number of instances) for each relevant category in the dataset. This frequency is the basis to determine the relevance of the different categories (relevance towards the goal of balancing the dataset). However, differences in frequencies may span several orders of magnitude, and their absolute values will vastly fluctuate across different datasets. For this reason, to determine the relevance of each category their respective frequencies are transformed using logarithms. Logarithms permit to assign a similar relative difference in relevance to categories with 1000 and 100 or with 100 and 10 occurrences.

Once the relative importance of each category is determined, a relevance score is computed for each data example, where the relevance value of each of its different categories is added.

After the relevance of each data example is computed, the algorithm may sort them and select the first n data examples in the list for performing the oversampling operation, which may be a data example duplication or some SMOTE variation for each of the selected data examples.

It is important to remark that when copies or variations of data examples are added to the initial multilabel dataset, the frequencies of our categories are being altered. For this reason, an iterative process is herein proposed, where relevance scores are reevaluated after each batch of oversampling operations. Since the algorithm is fast (scoring examples in particular), there is no relevant penalty to do this. Finally, the classifier is trained using the extended multilabel training dataset resulting from the oversampling iterations.

In summary, the present method provides the following features and advantages:

- The method assigns a unique relevance score to each data example.

- The method holds for any number and distribution of categories, in particular for large number of categories where data examples tend to have many of them simultaneously.

- The method captures the relative importance of each category regardless of large differences in frequencies.

- By being iterative, the method takes into account the perturbations introduced in the distribution of frequencies during the data balancing itself.

## BRIEF DESCRIPTION OF THE DRAWINGS

A series of drawings which aid in better understanding the invention and which are expressly related with an embodiment of said invention, presented as a non-limiting example thereof, are very briefly described below.

Figures 1A and 1B respectively depict data balancing in multicategory and multilabel datasets according to the prior art.

Figure 2 depicts a flow diagram of a computer-implemented method according to an embodiment of the present invention.

Figures 3A-3F show the different steps of the method applied to an illustrative example.

Figure 4 depicts, according to an illustrative example, frequencies and example relevance scores for different combination of categories.

Figure 5 is a schematic diagram depicting the components of the system according to an embodiment.

Figures 6A-6C represent the training of a classifier using an initial multilabel training dataset (Figure 6A), an extended multilabel training dataset obtained by a conventional data balancing method of the prior art (Figure 6B), and an extended multilabel training dataset obtained by the method of the present invention (Figure 6C).

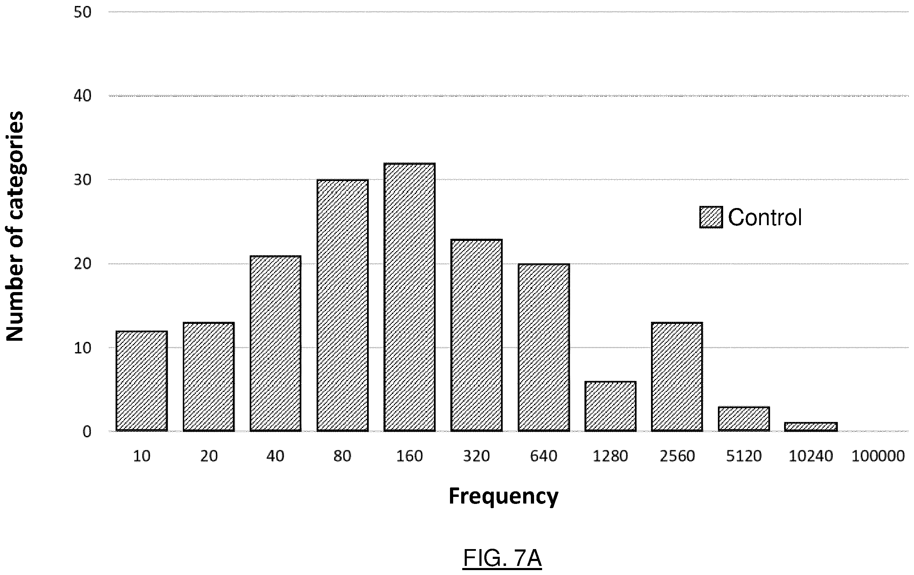

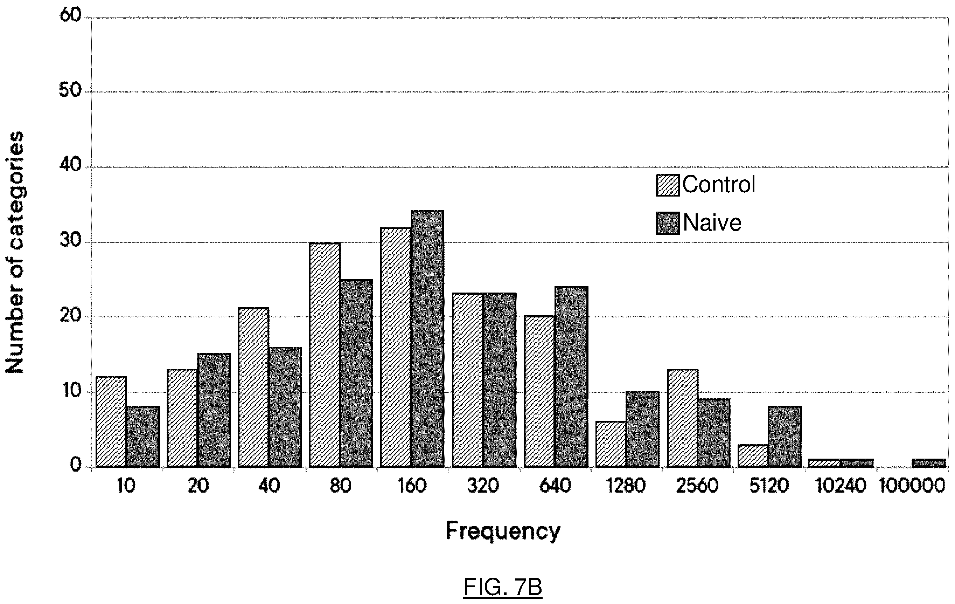

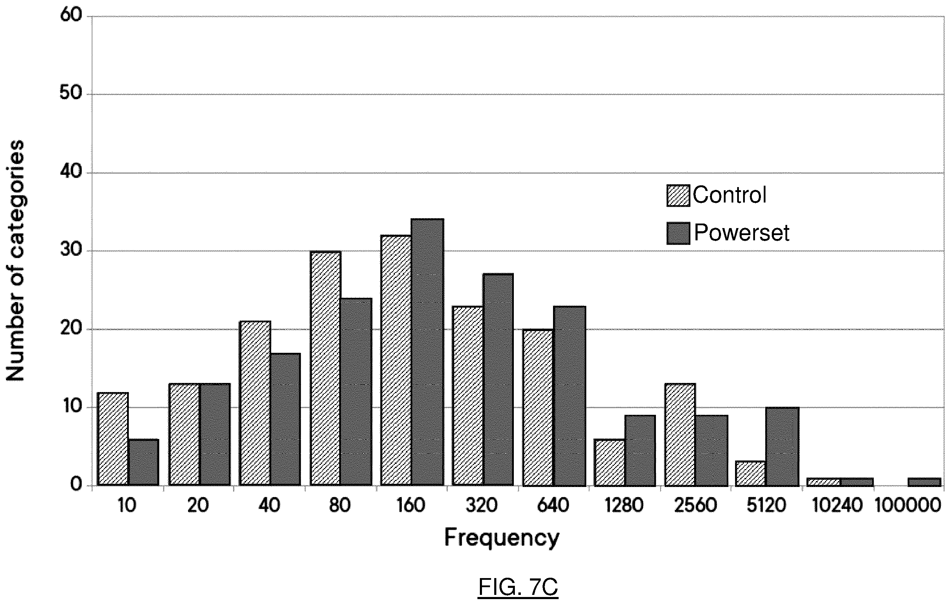

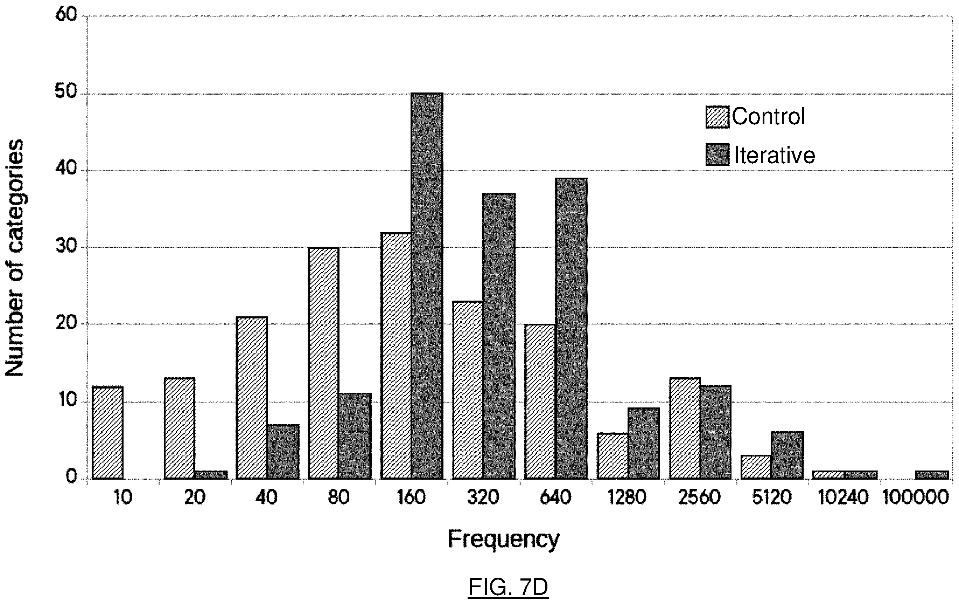

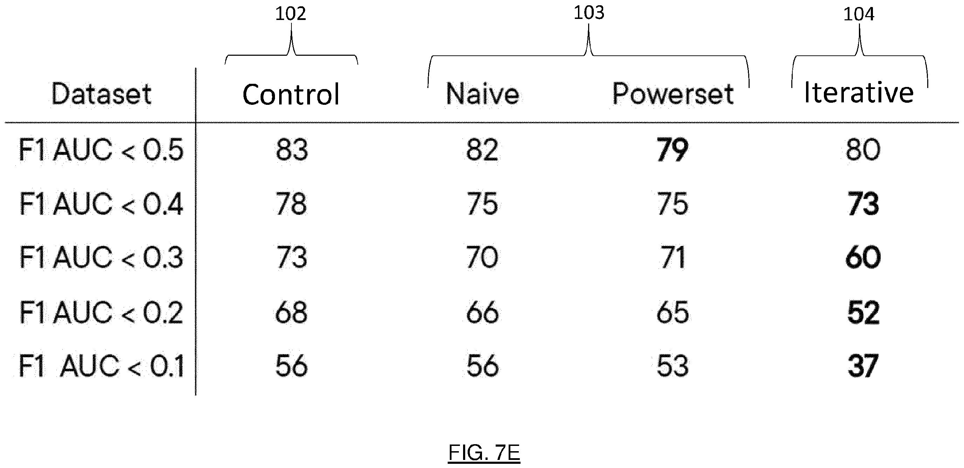

Figure 7A shows the distribution of frequencies for the categories in an initial multilabel training dataset (control dataset). Figure 7B Shows the distribution of frequencies for the categories after applying the Naive method for data balancing. Figure 7C shows the distribution of frequencies for the categories after applying the Powerset method for data balancing. Figure 7D shows the distribution of frequencies for the categories after applying the method for data balancing of the present invention. Figure 7E compares the performance of the classifier trained with the present method with the performance of the classifier trained according to the prior art.

## DETAILED DESCRIPTION

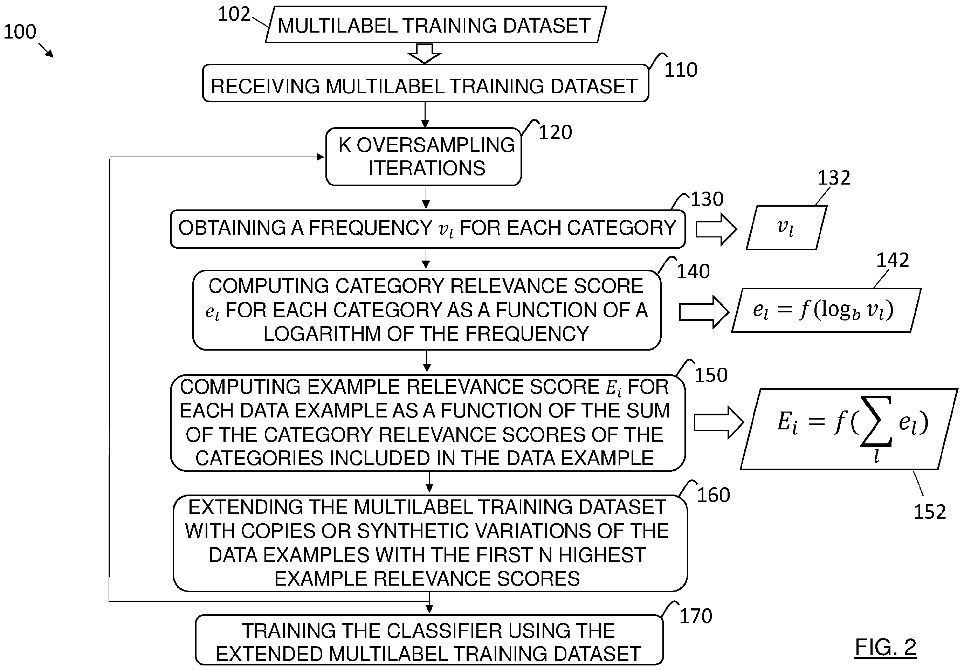

**Figure 2** depicts a flow diagram of a computer-implemented method 100 of efficiently training a classifier with a large multilabel training dataset according to an embodiment of the present invention. The method 100 includes a first step of receiving 110 a multilabel training dataset 102.

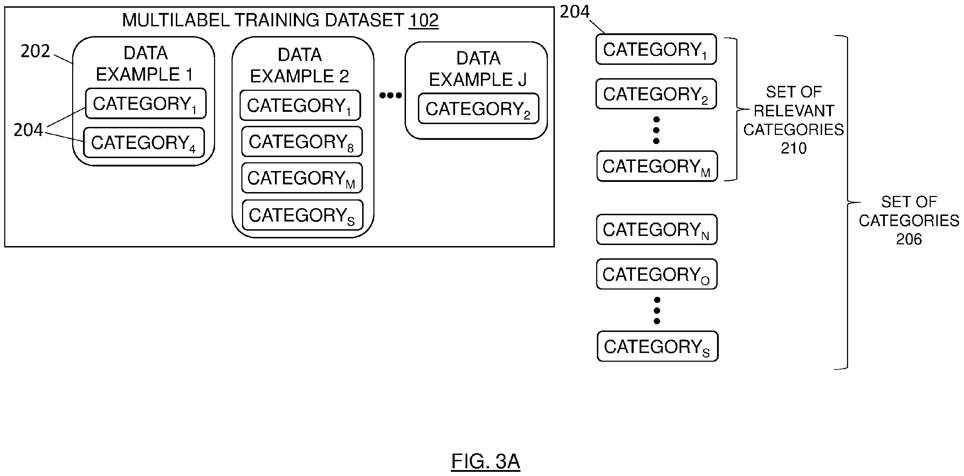

As illustrated in the example of **Figure 3A,** the received multilabel training dataset 102 comprises a plurality of data examples 202 (data example 1, data example 2, ..., data example J). Each data example 202 is associated to one or more categories 204 from a set of categories 206 {$category_1$, $category_2$, ..., $category_M$, $category_N$, $category_O$, ..., $category_S$} of the multilabel training dataset 102, at least one of the data examples 202 being associated to a plurality of categories 204. For instance, in the example of Figure 3A data example 1 belongs or is associated to two categories ($category_1$ and $category_4$), data example 2 is associated to four categories ($category_1$, $category_8$, $category_M$ and $category_S$), and data example J is associated to only one category ($category_2$). The number of different categories 204 included in the whole multilabel training dataset 102 (i.e. the number of categories 204 of the set of categories 206) is S.

The method 100 further comprises carrying out one or more oversampling iterations 120 (when more than one, the oversampling iterations 120 are successively executed one after another). The number of oversampling iterations 120 is K, which is preferably greater than 1. Each oversampling iteration 120 comprises the following steps:

- Obtaining 130 a frequency 132 ($v_l$) for each category 204 of a set of relevant categories 210, wherein the set of relevant categories 210 includes a plurality of categories 204 from the set of categories 206 of the multilabel training dataset 102.

- Computing 140, for each category 204 of the set of relevant categories 210, a category relevance score 142 ($e_l$) as a function of a logarithm of the frequency ($v_l$) of the corresponding category 204.

- Computing 150, for each data example 202, an example relevance score 152 ($E_i$) as a function of the sum of the category relevance scores ($e_l$) of the categories associated to the data example 202.

- Extending 160 the multilabel training dataset 102 with at least one copy or synthetic variation of each of the N data examples having the highest example relevance scores ($E_i$).

The set of relevant categories 210 is a subset of the set of categories 206 of the multilabel training dataset 102. In some cases, the set of relevant categories 210 and the set of categories 206 may be the same. The method may include a step of defining the set of relevant categories 210 including categories selected from among the set of categories 206 of the multilabel training dataset 102.

The multilabel training dataset 102 may include data examples 202 associated to one or more categories, but where none of the categories of the data example belong to the set of relevant categories 210 (e.g. a data example belonging only to $category_P$, wherein $category_P$ ∉ {$category_1$, ..., $category_M$}). For instance, the multilabel training dataset 102 may include images categorized as "tuxedos", wherein the category "tuxedos" is included in the set of categories 206 but is not included in the set of relevant categories 210. In this case, these data examples 202 are not relevant for the defined categories 210 {$category_1$, ..., $category_M$} and will not be selected in the oversampling iterations 120 since the computed example relevance score 152 for these data examples will be a minimum value, e.g. 0.

For the first oversampling iteration 120, the multilabel training dataset 102 is the original dataset previously received 110. The multilabel training dataset 102 considered for the second and subsequent oversampling iterations 120 is the one obtained by extending 160 the multilabel training dataset 102 in the corresponding previous oversampling iteration 120.

Finally, the method 100 includes training 170 a classifier using the multilabel training dataset resulting from the oversampling iterations 104 (i.e. the multilabel training dataset obtained in the last oversampling iteration 120, iteration K).

**Figures 3A-3F** shows different steps of the method 100 applied to an illustrative example. The frequency $v_l$ of a category $l$ is obtained 130 by counting the number of instances of said category $l$ in all the data examples 202 of the multilabel training dataset 102.

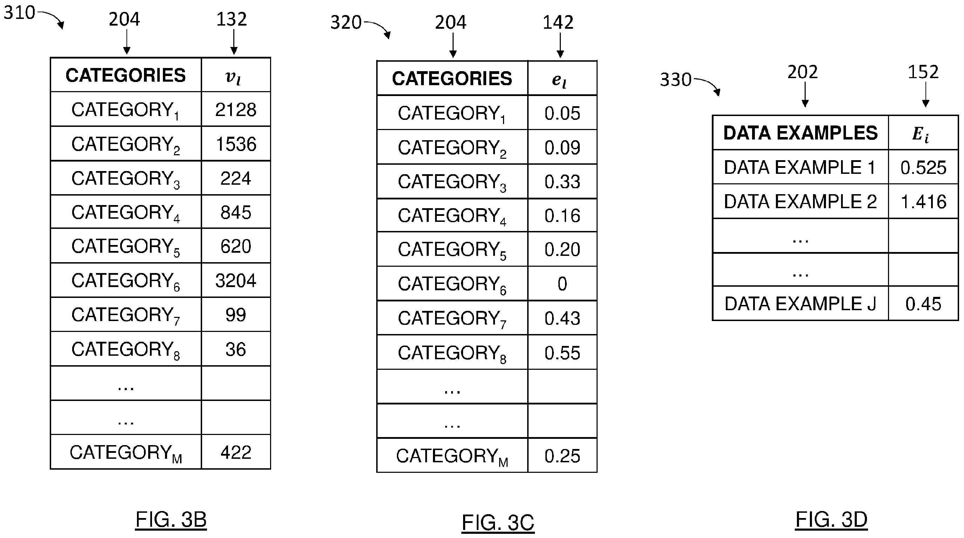

**Figure 3B** is an exemplary table 310 showing the frequencies 132 corresponding to each of the M categories 204 of the set of relevant categories 210 for the first oversampling iteration 120 (for which the multilabel training dataset 102 is the one depicted in Figure 3A); for example, the frequency of $category_1$ is 2128 (i.e. 2128 data examples -data example 1, data example 2 and 2126 other data examples- are associated with $category_1$). The frequency is used to determine the relevance of the different categories of the set of relevant categories 210. The categories {$category_N$, $category_O$, ..., $category_S$} from the set of categories 206 that are not included in the set of relevant categories 210 {$category_1$, ..., $category_M$} are not considered relevant, and therefore their associated frequency does not need to be computed (their frequency can be considered as 0, for instance).

The category relevance score $e_l$ of a category $l$ of the set of relevant categories 210 is a function of a logarithm of its corresponding frequency $v_l$, $e_l = f(\log_b v_l)$, $b$ being the base of the logarithm (e.g. base 10, base e, or any other base). The category relevance score $e_l$ for the categories not belonging to the set of relevant categories 210 may be considered to be a minimum value (e.g. 0).

The category relevance score $e_l$ may be normalized between a minimum value and a maximum value, so that the category relevance score $e_l$ of the category with the lowest frequency is the maximum value, and the category relevance score of the category with the highest frequency is the minimum value. In an embodiment, the

category relevance score $e_l$ is computed using the following equation, which includes normalizing the relevance of the different categories so that the rarest category (category with the lowest possible frequency, $v_l = 1$) is assigned a maximum value ($e_l = 1$), and the most common category (category with highest frequency $v_l$) takes a minimum value ($e_l = 0$):

$$e_l = 1 - \frac{\ln(v_l)}{\max_{1 \le i \le M}(\ln(v_i))}$$

Variations of this equation are acceptable as long as they include logarithmic scaling. For example, it may be desirable to normalize both the minimum value ($e_l = 0$) and the maximum value ($e_l, = 1$):

$$\tilde{e}_l = 1 - \frac{\log(v_l)}{\max_{1 \le i \le M}(\log(v_i))}$$

$$e_l = \tilde{e}_l / \max_{1 \le i \le M}(\tilde{e}_l)$$

The table 320 depicted in **Figure 3C** shows the category relevance score 142 assigned to each of the M categories 204 of the set of relevant categories 210 using the previous equation, considering in this example that category$_6$ has the highest frequency value ($v_6$=3204).

The example relevance score $E_i$ of data example $i$ is a function of the sum of the category relevance scores $e_l$ of all the categories $l$ of the set of relevant categories 210 associated to the corresponding data example $i$:

$$E_i = f(\textstyle\sum_l e_l).$$

In an embodiment, the example relevance score $E_i$ is the sum of the category relevance scores $e_l$ of all the categories $l$ associated to the corresponding data example:

$$E_i = \sum_l e_l$$

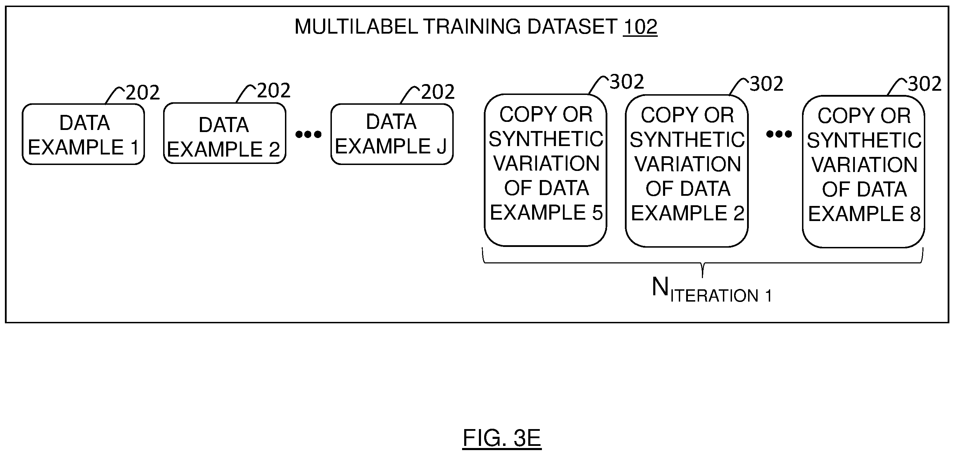

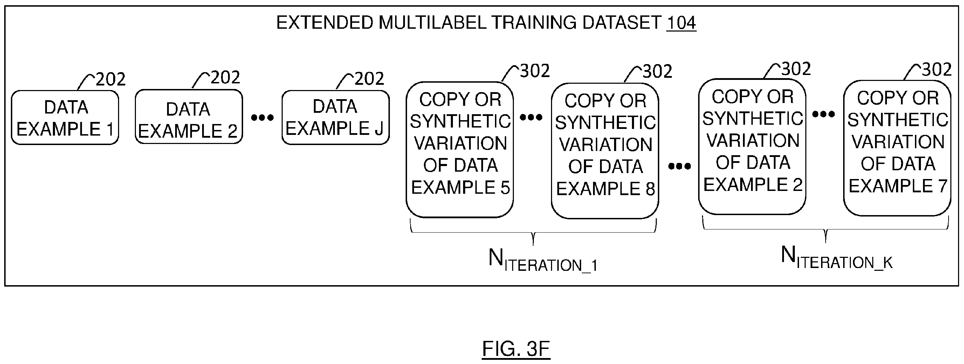

For instance, the example relevance score $E_i$ of data example 1 (which is associated to category$_1$ and category$_4$) in Figure 3 would be $\Sigma_l\, e_l = e_1 + e_4 = 0.05 + 0.16 = 0.21$, and the example relevance score $E_i$ of data example 2 would be $\Sigma_l\, e_l = e_1 + e_8 + e_M = 0.05 + 0.55 + 0.25 = 0.85$ (in this case $e_S$ is disregarded or considered to be 0, since category$_S$ is not part of the set of relevant categories 210).

Adding the category relevance scores $e_l$ will introduce a first bias towards examples with many categories, since all categories $l$ associated to the corresponding data example will contribute to the sum. Mathematically speaking, the relevance I of an example with category A will be less or equal than the relevance of an example with categories A and B, where $x_i$ represent the categories sorted in any given order:

$$I(x_1) \le I(x_1, x_2) \le \cdots \le I(x_1, \dots, x_n)$$

To reduce the first bias towards examples with many categories, the average importance of the categories in each dataset example may be taken. In this embodiment, the example relevance score $E_i$ is averaged by the number of categories $n_i$ in the data example $i$ belonging to the set of relevant categories 210:

$$E_i = \frac{\sum_l e_l}{n_i}$$

In that case, the example relevance score $E_i$ of data example 1 would be $\Sigma_l\, e_l / n_i = (e_1 + e_4)/n_i = (0.05 + 0.16)/2 = 0.105$, and the example relevance score $E_i$ of data example 2 would be $\Sigma_l\, e_l / n_i = (e_1 + e_8 + e_M)/n_i = (0.05 + 0.55 + 0.25)/3 = 0.283$. (in this case $e_S$ is disregarded for computing the number of categories $n_i$ since category$_6$ is not part of the set of relevant categories 210).

However, this equation would introduce a second bias where a rare category is penalized by any less-uncommon categories, even if they are relatively uncommon as well. In order to achieve a balance between the two competing first and second biases, a new parameter $\xi$ may be used in the equation:

$$E_i = \frac{\sum_l e_l}{n_i \cdot \xi}$$

The parameter $\xi$ controls the bias of the relevance score ($\xi \to 0$ favours data examples with many categories, whereas $\xi \to \infty$ favours data examples with few but rare categories). The equation can perfectly work in most cases using a default value, so that there is no need to adjust this value. $\xi=0.2$ is considered a proposed equilibrium; however, other values of $\xi$ may be used, depending on the particular application. The table 330 of Figure 3D shows the example relevance score 152 assigned to each of the data examples 202 using the previous equation and $\xi=0.2$.

In another embodiment, the equation is defined as:

$$E_i = \frac{\sum_l e_l}{\varepsilon + n_i \cdot \xi}$$

The parameter ε is a small number (0 < ε ≤ 0.1) for mathematical stability, to avoid dividing by zero (e.g., ε = 0.001) for data examples associated to no categories of the set of relevant categories 210 (e.g. a data example 204 belonging only to category$_P$, which is not a category of the set of relevant categories 210). For those cases where all the data examples 204 are associated to at least one category of the set of relevant categories 210, the number of categories $n_i$ would always be equal or greater than 1, and the parameter ε may therefore take a value of 0.

The calculation of the example relevance score $E_i$ may include an added noise factor. The added noise factor may be defined as $\beta \cdot N(0, \sigma)$. The equation of $E_i$ may be, for instance:

$$E_i = \frac{\sum_l e_l}{\varepsilon + n_i \cdot \xi} + \beta \cdot N(0, \sigma)$$

The parameters β and σ control the strength of the added noise and thus the desired behaviour of the algorithm, from β→0 (deterministic behaviour) to β→∞ where the algorithm results in random selection of data examples, and σ typically takes values in the order of magnitude of 0.05. The desired strength of noise should be determined by the final user. However, most applications will benefit from moderate noise, where values within a standard deviation of the noise distribution are equal or smaller than 0.1 (i.e. σ ≤ 0.1) and β is in the range of (0.5 ≤ β ≤ 2).

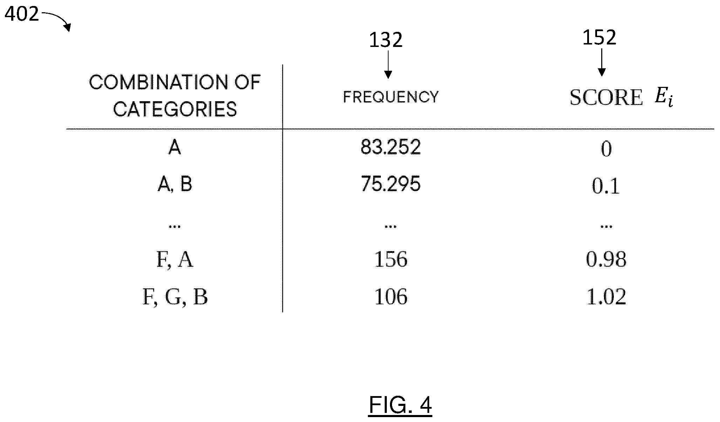

Adding a small amount of noise to the example relevance scores $E_i$ can improve the data balancing of the multilabel training dataset. For instance, if we want to add 80 examples for oversampling in the multilabel training dataset illustrated in the table 402 of **Figure 4,** wherein the data examples are associated in one or more categories from the set of categories {A, B, C, D, E, F, G}, we would take a random selection of {F, G, B} data examples only, since they have the greater example relevance score $E_i$. However, this score ($E_i$=1.02) is very close to the example relevance score of {F, A} data examples ($E_i$=0.98), so for a better data balancing it would make more sense to take most of the data examples from the first group (e.g. 70 data examples), and some from the second group (e.g. 10 data examples), where the specific amount of each should depend on the score distance. This is achieved by using a random noise.

A desired amount of total oversampling may be first preset (e.g. add 20% of the total number of data examples during the balancing process). In addition, the number K of oversampling iterations 120 may be predefined (e.g. K=10 iterations). For instance, if the multilabel training dataset has 1000 data examples and we want to add 20% for oversampling, 200 data examples need to be selected to improve data balancing. If the algorithm applies 10 oversampling iterations, then 20 examples per iteration need to be selected. In each oversampling iteration, an example relevance score $E_i$ is computed for each data example $i$ and the 20 data examples with the highest example relevance scores $E_i$ will be selected to include a copy (or synthetic variation) of each of them in the multilabel training dataset.

**Figure 3E** and **Figure 3F** depict the multilabel training dataset which has been extended with copies or synthetic variations 302 of the N data examples with the highest example relevance score $E_i$ for the first oversampling iteration 120 (iteration 1) and for the last oversampling iteration 120 (iteration K), respectively. After each oversampling iteration 120 the multilabel training dataset is different from the previous iteration, since it has been extended. The example relevance scores $E_i$ are recalculated in each iteration, and the N selected data examples may vary in subsequent oversampling iterations 120. For instance, in the first iteration (Figure 3E) the data examples with the highest example relevance scores $E_i$ are {data example 5, data example 2, ... , data example 8}, whereas in the last iteration K (Figure 3F) the data examples with the highest example relevance scores $E_i$ are {data example 2, ... , data example 7}.

The parameters $N_{ITERATION\_1}$ and $N_{ITERATION\_K}$ in Figure 3F represent the number of data examples selected in iteration 1 and 10, respectively. The number N of data examples selected in each oversampling iteration 120 is preferably constant throughout the iterations (e.g. $N_{ITERATION\_1}$=$N_{ITERATION\_K}$=20); however, it may also vary (e.g. $N_{ITERATION\_1}$ =22, $N_{ITERATION\_K}$=18).

In each oversampling iteration 120, the multilabel training dataset is extended with one or more copies or synthetic variations for each of the N selected data examples, although only one copy or synthetic variation of each of the selected data examples is preferably used for better data balancing.

The multilabel training dataset obtained in the last iteration K is the extended multilabel training dataset 104 (shown in the example of Figure 3F) which is used in the training step 170.

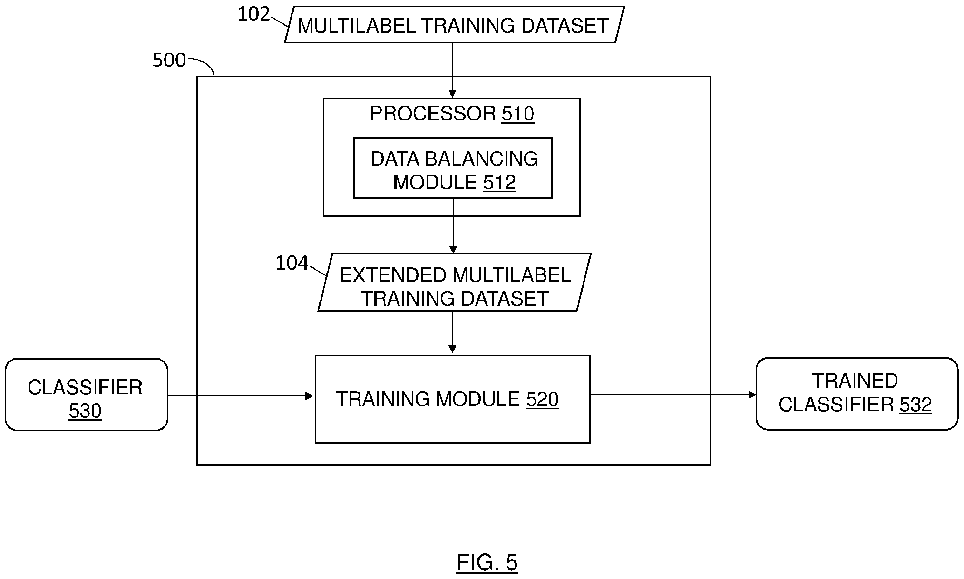

The present invention also refers to a system for training a classifier with a large multilabel training dataset. **Figure 5** is a schematic diagram showing the components of the system 500. In particular, the system comprises a processor 510 and a training module 520.

The processor 510 is configured to receive a multilabel training dataset 102 comprising a plurality of data examples 202, wherein each data example 202 is associated to one or more categories 204 from a set of categories 206 of the multilabel training dataset 102. The processor 510 is further configured to perform one or more successive oversampling iterations 120, which are executed by a data balancing module 512, which may be a software module running on the processor 510.

Each oversampling iteration 120 executed by the data balancing module 512 of the present invention comprises: obtaining a frequency 132 for each category 204 of a set of relevant categories 210, the set of relevant categories 210 including a plurality of categories 204 from the set of categories 206 of the multilabel training dataset 102; computing, for each category 204 of the set of relevant categories 210, a category relevance score 142 as a function of a logarithm of the frequency 132 of the corresponding category 204; computing, for each data example 202, an example relevance score 152 as a function of the sum of the category relevance scores 142 of the categories 204 associated to the data example 202; and extending the multilabel training dataset 102 with at least one copy or synthetic variation 302 of each of the N data examples 202 having the highest example relevance scores 152.

The system also includes a training module 520 configured to train a classifier 530 using the extended multilabel training dataset 104 resulting from the one or more oversampling iterations 120. The training module 520 can be any unit or device (e.g. a processor) programmed to perform any conventional training algorithm already known in the art to train any kind of classifier, such as artificial neural networks based on convolutional layers trained with the backpropagation algorithm. The training module 520 may be implemented in the processor 510 itself, in another processor or distributed among different processors, as is common in multi-GPU training for large neural-network architectures. The present invention does not include a novel training algorithm; instead, the present invention obtains, starting from an initial multilabel training dataset, a balanced multilabel training dataset which is used to train a classifier (any kind of training algorithms can be applied), instead of using the initial multilabel training dataset. The performance of the trained classifier thus obtained is significantly improved.

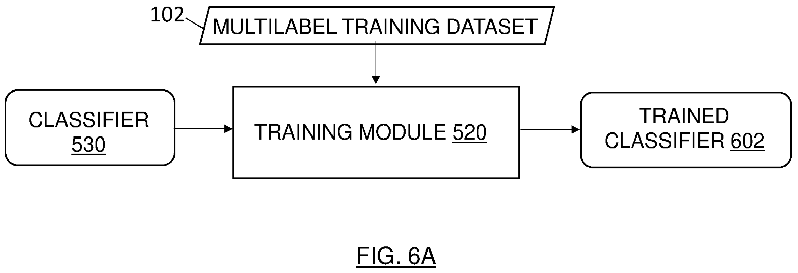

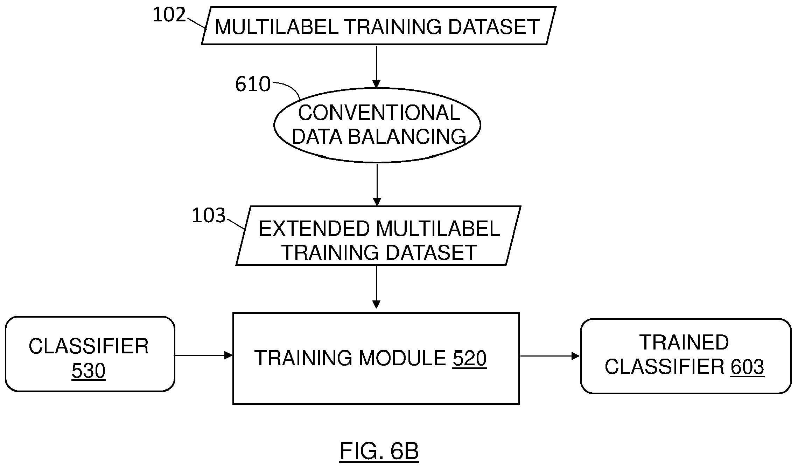

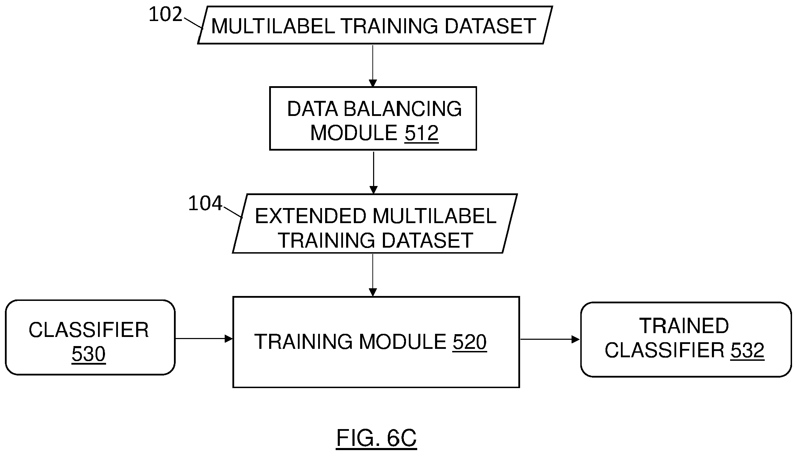

**Figure 6A** shows a classifier 530 trained by a training module 520 using an initial multilabel training dataset 102 (i.e. not balanced), so that a trained classifier 602 is obtained. **Figure 6B** depicts the same classifier 530 trained by the same training module 520 using an extended multilabel training dataset 103 obtained by applying any conventional data balancing method of the prior art (e.g. Powerset method or Naive method) on the initial multilabel training dataset 102, obtaining a trained classifier 603 which is more efficient when compared with the trained classifier 602 of Figure 6A except in datasets that are problematic to traditional balancing methods (e.g. many possible categories and data examples typically being relevant to a high number of categories). **Figure 6C** represents the training of the same classifier 530 with the same training module 520, but in this case using the extended multilabel training dataset 104 obtained by the data balancing module 512 of the present invention (Figure 5); the trained classifier 532 thus obtained is in turn more efficient than the trained classifier 603 of Figure 6B in which any conventional data balancing has been used. In particular, this means that while trained classifiers 602, 603 and 532 may provide relatively similar global metrics, when examining their performance for less common categories, trained classifiers 602 and 603 will have worse performance (e.g. more categories which are never predicted for data examples during inference). More technically, the trained classifier 532 of the present disclosure will improve precision and sensitivity metrics for uncommon categories.

The present disclosure may be applied to train different types of classifiers, such as image classifiers. The data balancing algorithm (i.e. oversampling iterations 120) of Figure 2 can be applied, for instance, to a multilabel training dataset of images from the fashion sector, wherein each image is associated to one or more categories.

**Figure 7A** shows a chart with the number of categories that have a given frequency for a control dataset of images (initial multilabel training dataset 102) in the fashion sector. For instance, the second column starting from the left indicates there are a bit more than 10 categories that are present in 10 to 20 images of the dataset, and the seventh column means that about 20 categories have a frequency between 320 and 640. A few categories are found in thousands of pictures. This large contrast of frequencies is a challenging feature of the dataset when training an image classifier.

The goal of the data balancing algorithm is to improve the subsequent training of an image classifier, by altering this distribution of frequencies towards the ideal situation where all categories have the same frequency or, at least, where the categories with small frequency disappear without significantly increasing the frequencies of already dominant categories. In other words, the data balancing method aims for reducing the number of columns on the left side of the graph of Figure 7A while avoiding as much as possible to increase the columns on the right side. Increasing the columns in the middle of the graph is the intended result of a good balancing process.

**Figure 7B** represents, in pairs of columns, the Naive data balancing method applied to the initial training dataset of Figure 7A (right column for the Naive method, left column for the initial setup of the control dataset of Figure 7A). This figure shows how the Naive method fails to achieve a good data balancing, since the distribution of frequencies is barely changed from the initial situation of the control dataset (Figure 7A). There are fluctuations, but none of them are qualitatively significant.

**Figure 7C** shows the results of the Powerset data balancing method applied to the initial dataset of Figure 7A, which are very similar to those obtained by the Naive method. In this case, slightly less noisy results are obtained (columns on the left slightly decrease, columns at centre-right slightly increase, columns at far right mostly increase), but they are otherwise equivalent to the Naive method.

**Figure 7D** shows the results obtained by the data balancing method (i.e. oversampling iterations 120 in Figure 2) of the present invention. This method excelled at reshaping the distribution of frequencies. Columns at the left side (representing uncommon categories) are gone or very significantly decreased, while adding the least pronounced increases in columns at the right side of the graph (representing unwanted increases in frequency for dominant categories). Uncommon categories are now in the middle of the chart, as ideally expected.

This improved data balancing of the training dataset has a positive impact in the training of an image classifier. In order to prove this effect, several image classifiers have been trained using standard techniques. The Fastai framework was used to train Resnet neural networks using the Transfer Learning paradigm. One epoch with a frozen model and two epochs after unfreezing was used. Usual data augmentation operations (flip, rotation, zoom, brightness, contrast, etc.) were applied during training, which is important when training for many epochs or if the dataset contains repeated images, as is the case for all data balancing techniques under consideration, which replicate images of the initial training dataset. The learning rate was set by applying the learning rate finder tool provided by Fastai. An optimal learning rate was found for the control dataset of Figure 7A and used without alteration for the balanced dataset.

For the evaluation of the classifiers trained under the different data balancing methods (Naive -Figure 7B-, Powerset -Figure 7C- or the iterative method of the present invention -Figure 7D-) the area under the F1 curve is used, in contrast with the more common area under the ROC curve, since F1 is considered a tougher and more descriptive measure for large and very unbalanced datasets. The F1 metric is the harmonic average of precision (positive predictive value) and recall (sensitivity). The area under the F1 curve examines F1 scores as a function of prediction thresholds. A high F1 AUC (Area Under Curve) metric correlates to good predicting power, and very low F1 AUC values correspond to useless classifiers, where either precision or recall are impractically low. For this reason, the number of categories (or labels) where the F1 AUC value of the classifier is below a threshold is analysed for the different trained classifiers.

The table depicted in **Figure 7E** includes the number of categories (given as percentage) where F1 AUC metric is below a given threshold, out of 174 total categories. The results in the first column are obtained for the classifier trained with the initial multilabel training dataset 102 (control dataset in Figure 7A). The results in the second and third columns correspond to the number of categories (in %) for the classifier trained with the extended multilabel training dataset 103 obtained with conventional data balancing methods, in particular the Naive method (second column) and the Powerset method (third column). Finally, the fourth column corresponds to the results obtained for the classifier trained with the extended multilabel training dataset 104 of Figure 7D (iterative method of the present invention).

The higher the F1 AUC metric for the different categories, the more precise is the trained classifier. Therefore, the lower the numbers in the table, the better, since this would involve fewer categories with poor performance. The classifier trained using the extended multilabel training dataset 104 obtained by the iterative data balancing method of the present invention achieves a significant reduction in underperforming categories. With the control dataset (first column) and the Naive dataset (second column), 56% of the categories have a very low F1 AUC score, under 0.1. With the Powerset dataset a slight reduction of 3 points, down to 53% (i.e. a 5% improvement), is obtained. In contrast, with the balanced dataset of the present invention (fourth column), the trained classifier has only 37% of categories below this threshold (F1 AUC<0.1), which is 19 points lower (i.e. a 34% improvement).

Improvements for threshold F1 AUC<0.3 are significant as well. The target score given by the control dataset is 73% in this case. Naive and Powerset dataset manage 70 and 71% respectively, while the balance dataset of the present invention scores 60%. The improvement for Naive method and Powerset method is 4% and 3% respectively, whereas the method of the present invention achieves an improvement of 18% with respect to the baseline of the control dataset.

The present disclosure improves the performance (by increasing the precision and recall in the prediction for the set of relevant categories 210 and reducing the number of useless categories) of a classifier by obtaining a more balanced training dataset and training the classifier with said training dataset. The improvement achieved is especially relevant for large training datasets with a great number of unique categories (e.g. more than 150 categories), where the amount of "useless categories" (F1 AUC<0.1) is reduced by more than 30% when compared to other conventional data-balancing techniques, such as Powerset method. Additionally, the algorithm of the present invention is easy to implement.

**Claims**

1. A computer-implemented method of training a classifier with a large multilabel training dataset, the method (100) comprising:

- receiving (110) a multilabel training dataset (102) comprising a plurality of data examples (202), wherein each data example (202) is associated to one or more categories (204) from a set of categories (206) of the multilabel training dataset (102);
- performing one or more successive oversampling iterations (120), each oversampling iteration (120) comprising:

obtaining (130) a frequency (132) for each category (204) of a set of relevant categories (210), the set of relevant categories (210) including a plurality of categories (204) from the set of categories (206) of the multilabel training dataset (102);

for each category (204) of the set of relevant categories (210), computing (140) a category relevance score (142) as a function of a logarithm of the frequency (132) of the corresponding category (204);

for each data example (202) in the multilabel training dataset (102), computing (150) an example relevance score (152) as a function of the sum of the category relevance scores (142) of the categories (204) associated to the data example (202); and

extending (160) the multilabel training dataset (102) with at least one copy or synthetic variation (302) of each of the N data examples (202) having the highest example relevance scores (152); and

- training (170) a classifier (530) using the extended multilabel training dataset (104) resulting from the one or more oversampling iterations (120).

2. The computer-implemented method of claim 1, wherein the category relevance score (142) is normalized between a minimum value and a maximum value, so that the category relevance score (142) of a category (204) having a frequency (132) equal to 1 is the maximum value, and the category relevance score (142) of the category (204) with the highest frequency (132) is the minimum value.

3. The computer-implemented method of claim 2, wherein the category relevance score (142) is defined by the following equation:

$$e_l = 1 - \frac{\ln(v_l)}{\max_{1 \le i \le M}(\ln(v_i))}$$

wherein $e_l$ is the category relevance score (142) of a category $l$ of the set of relevant categories (210) and $v_i$ represents the frequency (132) of a category $i$.

4. The computer-implemented method of any preceding claim, wherein the example relevance score (152) is defined as:

$$E_i = \frac{\sum_l e_l}{\varepsilon + n_i \cdot \xi}$$

wherein $E_i$ is the example relevance score (152) of data example i, $\Sigma_l\, e_l$ is the sum of the category rel-

evance scores $e_l$ of all the categories $l$ associated to the data example $i$, , $n_i$ is the number of categories in the data example $i$ belonging to the set of relevant categories (210), $\varepsilon$ and $\xi$ being parameters with predefined positive values.

5. The computer-implemented method of any preceding claim, wherein the example relevance score (152) includes an added noise factor.

6. The computer-implemented method of claim 5, wherein the added noise factor is defined as:

$$\beta \cdot N(0, \sigma)$$

wherein $N(0, \sigma)$ is a random value obtained from a normal distribution with mean 0 and standard deviation $\sigma$, $\beta$ and $\sigma$ being parameters with predefined positive values.

7. The computer-implemented method of any preceding claim, wherein the data examples (202) of the multilabel training dataset (102) are images and the classifier (530) is an image classifier.

8. A system for training a classifier with a large multilabel training dataset, the system (500) comprising:

- a processor (510) configured to:

receive a multilabel training dataset (102) comprising a plurality of data examples (202), wherein each data example (202) is associated to one or more categories (204) from a set of categories (206) of the multilabel training dataset (102); and

perform one or more successive oversampling iterations (120), each oversampling iteration (120) comprising:

obtain a frequency (132) for each category (204) of a set of relevant categories (210), the set of relevant categories (210) including a plurality of categories (204) from the set of categories (206) of the multilabel training dataset (102);

for each category (204) of the set of relevant categories (210), compute a category relevance score (142) as a function of a logarithm of the frequency (132) of the corresponding category (204);

for each data example (202) in the multilabel training dataset (102), compute an example relevance score (152) as a function of the sum of the category relevance scores (142) of the categories

(204) associated to the data example (202); and

extend the multilabel training dataset (102) with at least one copy or synthetic variation (302) of each of the N data examples (202) having the highest example relevance scores (152); and

- a training module (520) configured to train a classifier (530) using the extended multilabel training dataset (104) resulting from the one or more oversampling iterations (120).

9. The system of claim 8, wherein the processor (510) is configured to normalize the category relevance score (142) between a minimum value and a maximum value, so that the category relevance score (142) of a category (204) having a frequency (132) equal to 1 is the maximum value, and the category relevance score (142) of the category (204) with the highest frequency (132) is the minimum value.

10. The system of claim 9, wherein the processor (510) is configured to compute the category relevance score (142) using the following equation:

$$e_l = 1 - \frac{\ln(v_l)}{\max_{1 \leq i \leq M} (\ln(v_i))}$$

wherein $e_l$ is the category relevance score (142) of a category $l$ of the set of relevant categories (210) and $v_i$ represents the frequency (132) of a category $i$.

11. The system of any of claims 8 to 10, wherein the processor (510) is configured to compute the example relevance score (152) using the following equation:

$$E_i = \frac{\sum_l e_l}{\varepsilon + n_i \cdot \xi}$$

wherein $E_i$ is the example relevance score (152) of data example i, $\sum_l e_l$ is the sum of the category relevance scores $e_l$ of all the categories $l$ associated to the data example $i$, , $n_i$ is the number of categories in the data example $i$ belonging to the set of relevant categories (210), $\varepsilon$ and $\xi$ being parameters with predefined positive values.

12. The system of any of claims 8 to 11, wherein the processor (510) is configured to compute the example relevance score (152) by adding a noise factor.

13. The system of claim 12, wherein the added noise factor is defined as:

$$\beta \cdot N(0, \sigma)$$

wherein $N(0, \sigma)$ is a random value obtained from a normal distribution with mean 0 and standard deviation $\sigma$, $\beta$ and $\sigma$ being positive values.

14. The system of any of claims 8 to 13, wherein the data examples (202) of the multilabel training dataset (102) are images and the training module (520) is configured to train an image classifier (530).

15. A non-transitory computer-readable storage medium for training a classifier with a large multilabel training dataset, comprising computer code instructions that, when executed by a processor, causes the processor to perform the method of any of claims 1 to 7.

FIG. 1A

A: 8
B: 5
C: 3

A: 13
B: 13
C: 8

FIG. 1B

EP 4 471 626 A1

```
                    ┌─────────────────────────────────┐
102 ─────────────►  │ MULTILABEL TRAINING DATASET     /
                    └─────────────────────────────────┘
100
                    ┌─────────────────────────────────┐
                    │ RECEIVING MULTILABEL            │ ── 110
                    │ TRAINING DATASET                │
                    └─────────────────────────────────┘

                    ┌─────────────────┐
                    │ K OVERSAMPLING  │ ── 120
                    │ ITERATIONS      │
                    └─────────────────┘
```

MULTILABEL TRAINING DATASET — 102

RECEIVING MULTILABEL TRAINING DATASET — 110

K OVERSAMPLING ITERATIONS — 120

OBTAINING A FREQUENCY $v_l$ FOR EACH CATEGORY — 130

$$v_l$$ — 132

COMPUTING CATEGORY RELEVANCE SCORE $e_l$ FOR EACH CATEGORY AS A FUNCTION OF A LOGARITHM OF THE FREQUENCY — 140

$$e_l = f(\log_b v_l)$$ — 142

COMPUTING EXAMPLE RELEVANCE SCORE $E_i$ FOR EACH DATA EXAMPLE AS A FUNCTION OF THE SUM OF THE CATEGORY RELEVANCE SCORES OF THE CATEGORIES INCLUDED IN THE DATA EXAMPLE — 150

$$E_i = f\left(\sum_l e_l\right)$$ — 152

EXTENDING THE MULTILABEL TRAINING DATASET WITH COPIES OR SYNTHETIC VARIATIONS OF THE DATA EXAMPLES WITH THE FIRST N HIGHEST EXAMPLE RELEVANCE SCORES — 160

TRAINING THE CLASSIFIER USING THE EXTENDED MULTILABEL TRAINING DATASET — 170

FIG. 2

EP 4 471 626 A1

FIG. 3A

310 → 204 132

| CATEGORIES | $v_l$ |
|---|---|
| CATEGORY$_1$ | 2128 |
| CATEGORY$_2$ | 1536 |
| CATEGORY$_3$ | 224 |
| CATEGORY$_4$ | 845 |
| CATEGORY$_5$ | 620 |
| CATEGORY$_6$ | 3204 |
| CATEGORY$_7$ | 99 |
| CATEGORY$_8$ | 36 |
| ... | |
| ... | |
| CATEGORY$_M$ | 422 |

FIG. 3B

320 → 204 142

| CATEGORIES | $e_l$ |
|---|---|
| CATEGORY$_1$ | 0.05 |
| CATEGORY$_2$ | 0.09 |
| CATEGORY$_3$ | 0.33 |
| CATEGORY$_4$ | 0.16 |
| CATEGORY$_5$ | 0.20 |
| CATEGORY$_6$ | 0 |
| CATEGORY$_7$ | 0.43 |
| CATEGORY$_8$ | 0.55 |
| ... | |
| ... | |
| CATEGORY$_M$ | 0.25 |

FIG. 3C

330 → 202 152

| DATA EXAMPLES | $E_i$ |
|---|---|
| DATA EXAMPLE 1 | 0.525 |
| DATA EXAMPLE 2 | 1.416 |
| ... | |
| ... | |
| DATA EXAMPLE J | 0.45 |

FIG. 3D

EP 4 471 626 A1

MULTILABEL TRAINING DATASET 102

DATA EXAMPLE 1 — 202

DATA EXAMPLE 2 — 202

••• 

DATA EXAMPLE J — 202

COPY OR SYNTHETIC VARIATION OF DATA EXAMPLE 5 — 302

COPY OR SYNTHETIC VARIATION OF DATA EXAMPLE 2 — 302

•••

COPY OR SYNTHETIC VARIATION OF DATA EXAMPLE 8 — 302

$N_{ITERATION\ 1}$

FIG. 3E

EP 4 471 626 A1

EXTENDED MULTILABEL TRAINING DATASET <u>104</u>

| DATA EXAMPLE 1 (202) | DATA EXAMPLE 2 (202) | ••• | DATA EXAMPLE J (202) | COPY OR SYNTHETIC VARIATION OF DATA EXAMPLE 5 (302) | ••• | COPY OR SYNTHETIC VARIATION OF DATA EXAMPLE 8 (302) | ••• | COPY OR SYNTHETIC VARIATION OF DATA EXAMPLE 2 (302) | ••• | COPY OR SYNTHETIC VARIATION OF DATA EXAMPLE 7 (302) |

$N_{ITERATION\_1}$     $N_{ITERATION\_K}$

<u>FIG. 3F</u>

EP 4 471 626 A1

| COMBINATION OF CATEGORIES | FREQUENCY | SCORE $E_i$ |
|---|---|---|
| A | 83.252 | 0 |
| A, B | 75.295 | 0.1 |
| ... | ... | ... |
| F, A | 156 | 0.98 |
| F, G, B | 106 | 1.02 |

FIG. 4

EP 4 471 626 A1

102 MULTILABEL TRAINING DATASET

500

PROCESSOR 510

DATA BALANCING
MODULE 512

104 EXTENDED MULTILABEL
TRAINING DATASET

CLASSIFIER
530

TRAINING MODULE 520

TRAINED
CLASSIFIER 532

FIG. 5

MULTILABEL TRAINING DATASET 102

CLASSIFIER 530 → TRAINING MODULE 520 → TRAINED CLASSIFIER 602

FIG. 6A

EP 4 471 626 A1

FIG. 6B

EP 4 471 626 A1

102 — MULTILABEL TRAINING DATASET

↓

DATA BALANCING
MODULE 512

↓

104 — EXTENDED MULTILABEL
TRAINING DATASET

↓

CLASSIFIER
530 → TRAINING MODULE 520 → TRAINED
CLASSIFIER 532

FIG. 6C

FIG. 7B

FIG. 7C

EP 4 471 626 A1

FIG. 7D

EP 4 471 626 A1

|  | | 102 | | 103 | | 104 |
| Dataset | Control | Naive | Powerset | Iterative |
| --- | --- | --- | --- | --- |
| F1 AUC < 0.5 | 83 | 82 | **79** | 80 |
| F1 AUC < 0.4 | 78 | 75 | 75 | **73** |
| F1 AUC < 0.3 | 73 | 70 | 71 | **60** |
| F1 AUC < 0.2 | 68 | 66 | 65 | **52** |
| F1 AUC < 0.1 | 56 | 56 | 53 | **37** |

<u>FIG. 7E</u>

EP 4 471 626 A1

Europäisches
Patentamt

European
Patent Office

Office européen
des brevets

# EUROPEAN SEARCH REPORT

Application Number

EP 23 38 2520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | GIRALDO-FORERO ANDRÉS FELIPE ET AL: "Managing Imbalanced Data Sets in Multilabel Problems: A Case Study with the SMOTE Algorithm", 20 November 2013 (2013-11-20), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 334 - 342, XP047131697, ISBN: 978-3-540-74549-5 | 1-6, 8-13,15 | INV. G06F18/28 G06V10/72 G06V10/772 G06V10/774 |
| A | * the whole document * ----- | 7,14 | |
| A | SADHUKHAN PAYEL ET AL: "Lattice and Imbalance Informed Multi-Label Learning", IEEE ACCESS, IEEE, USA, vol. 8, 25 December 2019 (2019-12-25), pages 7394-7407, XP011765466, DOI: 10.1109/ACCESS.2019.2962201 [retrieved on 2020-01-13] * the whole document * ----- | 1-15 | |
| A | ZHANG XINGFU ET AL: "Threshold Moving Approaches for Addressing the Class Imbalance Problem and their Application to Multi-label Classification", 19TH BRAZILIAN SYMPOSIUM ON SOFTWARE QUALITY, ACMPUB27, NEW YORK, NY, USA, 13 November 2020 (2020-11-13), pages 72-77, XP058586006, DOI: 10.1145/3441250.3441274 ISBN: 978-1-4503-8976-1 * the whole document * ----- | 1-15 | TECHNICAL FIELDS SEARCHED (IPC) G06F G06V |

The present search report has been drawn up for all claims

| Place of search | Date of completion of the search | Examiner |
|---|---|---|
| The Hague | 7 November 2023 | Nowbakht Irani, Ali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GIRALDO-FORERO et al.** Managing Imbalanced Data Sets in Multilabel Problems: A Case. *Study with the SMOTE Algorithm,* 2013
- **CHARTE et al.** Addressing imbalance in multilabel classification: Measures and random resampling algorithms. *Neurocomputing,* 2015, vol. 163, 3-16
- **BOUTELL, M. ; LUO, J. ; SHEN, X. ; BROWN, C.** Learning multi-label scene classification. *Pattern Recognition,* 2004, vol. 37 (9), 1757-1771
- **CHARTE et al.** *Resampling Multilabel Datasets by Decoupling Highly Imbalanced Labels,* 2015